(19)

Europäisches
Patentamt
European
Patent Office
Office européen
des brevets

(11) **EP 3 663 830 B1**

(12) **EUROPEAN PATENT SPECIFICATION**

(45) Date of publication and mention
of the grant of the patent:
**17.09.2025 Bulletin 2025/38**

(51) International Patent Classification (IPC):
***G02B 7/32*** (2021.01)   ***G02B 13/00*** (2006.01)
***H04N 13/239*** (2018.01)

(21) Application number: **19213806.3**

(22) Date of filing: **05.12.2019**

(52) Cooperative Patent Classification (CPC):
**G02B 13/004; G02B 7/32; G02B 13/008;
H04N 13/239; H04N 2213/001**

(54) **LENS ASSEMBLY AND ELECTRONIC DEVICE INCLUDING THE SAME**

LINSENANORDNUNG UND ELEKTRONISCHE VORRICHTUNG DAMIT

ENSEMBLE LENTILLE ET DISPOSITIF ÉLECTRONIQUE LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.12.2018 KR 20180155873**

(43) Date of publication of application:
**10.06.2020 Bulletin 2020/24**

(73) Proprietor: **Samsung Electronics Co., Ltd.
Gyeonggi-do 16677 (KR)**

(72) Inventors:
• **LEE, Hwanseon
16677 Gyeonggi-do (KR)**

• **KIM, Yunjeong
16677 Gyeonggi-do (KR)**
• **KIM, Changhan
16677 Gyeonggi-do (KR)**
• **LEE, Junghyun
16677 Gyeonggi-do (KR)**

(74) Representative: **Arnold & Siedsma
Bezuidenhoutseweg 57
2594 AC The Hague (NL)**

(56) References cited:
**TW-A- 201 915 537      US-A- 5 541 703
US-A1- 2012 327 521     US-A1- 2015 286 032
US-A1- 2019 101 724**

## Description

## TECHNICAL FIELD

Certain embodiments generally relate to an optical device, such as a lens assembly including a plurality of lenses and an electronic device including the lens assembly.

## BACKGROUND

Optical devices (e.g., a camera capable of capturing image or video) are widely used. Recently, digital cameras or video cameras having solid image sensors (e.g., charge coupled device (CCD) or complementary metal-oxide semiconductor (CMOS)) have been widely distributed. Optical devices that include solid image sensors (CCD or CMOS) are replacing film-type optical devices due to ease of image storage and reproduction as well as being more portable compared to the film-type optical devices.

Recently, multiple optical devices (e.g., a telephoto camera and a wide-angle camera) have been mounted together in a single electronic device in order to improve the quality of captured images and to provide various visual effects to the captured images. For example, images of a subject may be acquired via a plurality of cameras having different optical characteristics, and the images may be synthesized in order to acquire a captured image. Such optical devices may be mounted on an electronic device specialized for an image-capturing function such as a digital camera. Recently, these optical devices have also been mounted in miniaturized portable electronic devices, such as mobile communication terminals.

TW 201915537 A discloses an electronic device including at least one optical lens assembly. The optical lens assembly includes four lens elements, a first lens element having an outside surface convex in a paraxial region, a second lens element having an inside surface convex in a paraxial region, a fourth lens element having an inside surface concave in a paraxial region.

US 2012/0327521 A1 discloses an optical image lens assembly including four lens elements, a first lens element having positive refractive power and convex object-side surface, a third lens element of plastic material and being aspheric, and a fourth lens element of plastic element and being aspheric.

## SUMMARY

Optical devices such as cameras have a specialized function of capturing images of a subject, but may be mounted in an electronic device to provide additional functions, such as object recognition, augmented reality implementation, or 3D scanning. In implementing these additional functions, information about the 3D shape of a subject, for example, the distance or depth information of the subject may be useful. In detecting distance information, various methods may be used, such as stereoscope mapping using a plurality of image sensors, structured-light method capturing an image of a subject by projecting structured light onto the subject, and time-of-flight (ToF) method based on the time it takes for the light reflected by a subject to return. Among these, the ToF method, which is more easily miniaturized, may be most suitable for miniaturized electronic devices such as mobile communication terminals.

The structured light method or the ToF method may have better performance in accuracy of detecting distance information. However, the structured light method is difficult to miniaturize, and accuracy of the ToF method may degrade depending on the external environment, for example, due to interference by light having wavelength not used for measurement.

The invention is defined by claim 1.

According to an embodiment, a lens assembly includes: a first lens having positive refractive power, a subject side surface of the first lens having a convex shape towards a subject; a second lens having positive refractive power, a subject side surface of the second lens including a center portion intersecting an optical axis having a convex shape towards the subject and a peripheral portion around the center portion and having a convex shape towards an image sensor; a third lens having negative refractive power; and a fourth lens having positive refractive power. The first lens, the second lens, the third lens, and the fourth lens are sequentially arranged from the subject to the image sensor along the optical axis, and the sum of Abbe numbers of the first lens, the second lens, the third lens, and the fourth lens satisfies Conditional Expression 1 as follows. $20 \leq v1 + v2 + v3 + v4 \leq 125$

Here, "v1" represents the Abbe number of the first lens, "v2" represents the Abbe number of the second lens, "v3" represents the Abbe number of the third lens, and "v4" represents the Abbe number of the fourth lens.

According to an embodiment, an electronic device includes: a first camera including a lens assembly, and configured to acquire first information on a subject from light incident through the lens assembly; at least one second camera configured to acquire second information on the subject different from the first information; and a processor or an image signal processor configured to detect distance information (e.g., depth information) of the subject based on the first information. The lens assembly includes: a first lens having positive refractive power, a subject side surface of the first lens having a convex shape towards the subject; a second lens having positive refractive power, a subject side surface of the second lens including a center portion intersecting an optical axis having a convex shape towards the subject and a peripheral portion around the center portion and having a convex shape towards an image sensor; a third lens having negative refractive power; and a fourth lens having positive refractive power. The first lens, the second lens, the third lens, and the fourth lens are sequentially arranged from the subject to the image sensor along the optical axis, and the sum of Abbe numbers of the first lens, the second lens, the third lens, and the fourth lens satisfies Conditional Expression 6 as follows. $20 \leq v1 + v2 + v3 + v4 \leq 125$

Here, "v1" represents the Abbe number of the first lens, "v2" represents the Abbe number of the second lens, "v3" represents the Abbe number of the third lens, and "v4" represents the Abbe number of the fourth lens.

BRIEF DESCRIPTION OF THE DRAWINGS

The above and other aspects, features, and advantages of the disclosure will be more apparent from the following detailed description taken in conjunction with the accompanying drawings, in which:

FIG. 1 is a block diagram of an electronic device according to various embodiments in a network environment;

FIG. 2 is a block diagram exemplifying a camera module according to various embodiments;

FIG. 3 is a perspective view illustrating the front face of an electronic device according to an embodiment;

FIG. 4 is a perspective view illustrating the rear face of the electronic device illustrated FIG. 3;

FIG. 5 is a view illustrating the configuration of a lens assembly according to a first embodiment of the invention.

FIG. 6 is a view illustrating the configuration of a lens assembly according to a second embodiment not falling under the scope of the invention.

FIG. 7 is a view illustrating the configuration of a lens assembly according to a third embodiment not falling under the scope of the invention.

FIG. 8 is a view illustrating the configuration of a lens assembly according to a fourth embodiment not falling under the scope of the invention.

FIG. 9 is a view illustrating the configuration of a lens assembly according to a fifth embodiment.

DETAILED DESCRIPTION

Certain embodiments disclosed herein may provide a lens assembly that is compact and easy to manufacture and is capable of providing good performance in detecting distance information, and an electronic device including the lens assembly.

According to one or more embodiments, a lens assembly or an electronic device including the same includes a plurality of lenses, and the sum of the Abbe numbers of included lenses is lowered. Thus, it is possible to simplify the materials of the lenses. For example, since chromatic aberration correction is unnecessary in detecting distance information, it is possible to reduce the manufacturing cost of the lens assembly by simplifying the materials of the lenses (e.g., plastic) by lowering the sum of the Abbe numbers of the lenses. In an embodiment, it is possible to implement the lens assembly according to certain embodiments by combining aspherical lenses having high refractive indices, so that the lens assembly can be miniaturized. For example, the lens assembly according to certain embodiments can be easily mounted on miniaturized electronic devices such as mobile communication terminals. In another embodiment, the lens assembly is capable of obtaining good performance in detecting distance information by including a band-pass filter,

As the disclosure allows for various changes and numerous embodiments, some exemplary embodiments will be described in detail with reference to the accompanying drawings. However, it should be understood that the disclosure is not limited to the specific embodiments, but the disclosure includes all modifications, equivalents, and alternatives within the spirit and the scope of the disclosure.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. Although ordinal terms such as "first" and "second" may be used to describe various elements, these elements are not limited by the terms. The terms are used merely for the purpose to distinguish an element from the other elements. For example, a first element could be termed a second element, and similarly, a second element could be also termed a first element without departing from the scope of the disclosure. As used herein, the term "and/or" includes any and all combinations of one or more associated items. It is to be understood that if an element (e.g., a first element) is referred to with or without the term "operatively" or "communicatively," as "coupled with," or "connected with," it means that the element may be coupled with the other element directly (e.g., wiredly), wirelessly, or via a third element.

Further, the relative terms "a front surface," "a rear surface," "a top surface," "a bottom surface," and the like which are described with respect to the orientation in the drawings may be replaced by ordinal numbers such as first and second. In the ordinal numbers such as first and second, their order are determined in the mentioned order or arbitrarily and may not be arbitrarily changed if necessary.

In the disclosure, the terms are used to describe specific embodiments, and are not intended to limit the disclosure. As used herein, the singular forms are intended to include the plural forms as well, unless the context clearly indicates otherwise. In the description, it should be understood that the terms "include" or "have" indicate existence of a feature, a number, a step, an operation, a structural element, parts, or a combination thereof, and do not previously exclude the existences or probability of addition of one or more other features, numerals, steps, operations, structural elements, parts, or combinations thereof.

Unless defined differently, all terms used herein, which include technical terminologies or scientific terminologies, have the same meaning as that understood by a person skilled in the art to which the disclosure belongs. Such terms as those defined in a generally used dictionary are to be interpreted to have the meanings equal to the contextual meanings in the relevant field of art, and are not to be interpreted to have ideal or excessively formal meanings unless clearly defined in the specification.

In the disclosure, an electronic device may be a random device, and the electronic device may be called a terminal, a portable terminal, a mobile terminal, a communication terminal, a portable communication terminal, a portable mobile terminal, a touch screen or the like.

For example, the electronic device may be a smartphone, a portable phone, a game player, a TV, a display unit, a heads-up display unit for a vehicle, a notebook computer, a laptop computer, a tablet Personal Computer (PC), a Personal Media Player (PMP), a Personal Digital Assistants (PDA), and the like. The electronic device may be implemented as a portable communication terminal which has a wireless communication function and a pocket size. Further, the electronic device may be a flexible device or a flexible display device.

The electronic device may communicate with an external electronic device, such as a server or the like, or perform an operation through an interworking with the external electronic device. For example, the electronic device may transmit an image photographed by a camera and/or position information detected by a sensor unit to the server through a network. The network may be a mobile or cellular communication network, a Local Area Network (LAN), a Wireless Local Area Network (WLAN), a Wide Area Network (WAN), an Internet, a Small Area Network (SAN) or the like, but is not limited thereto.

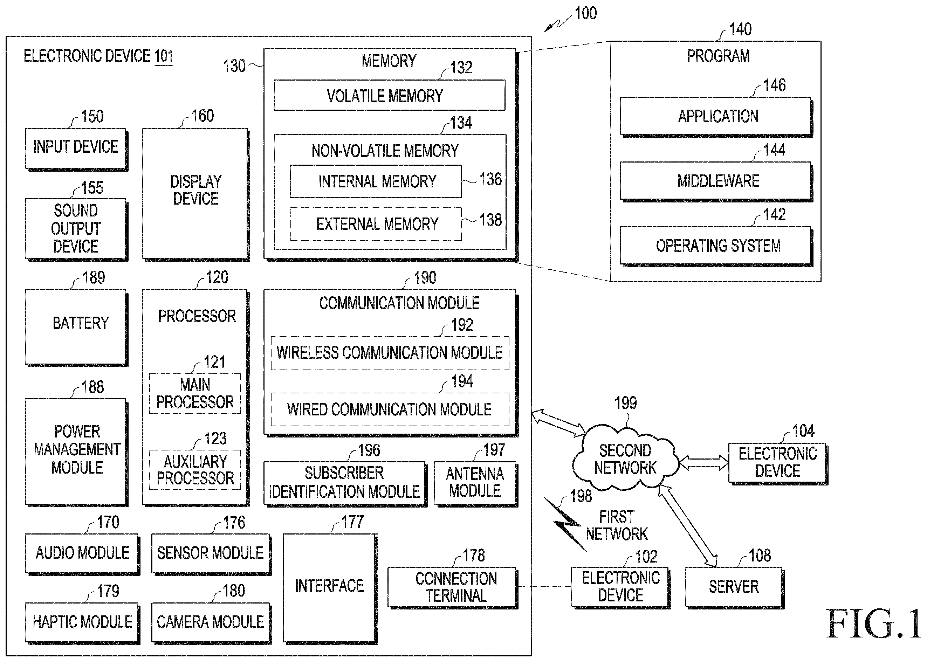

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary

**EP 3 663 830 B1**

processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing recordings, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

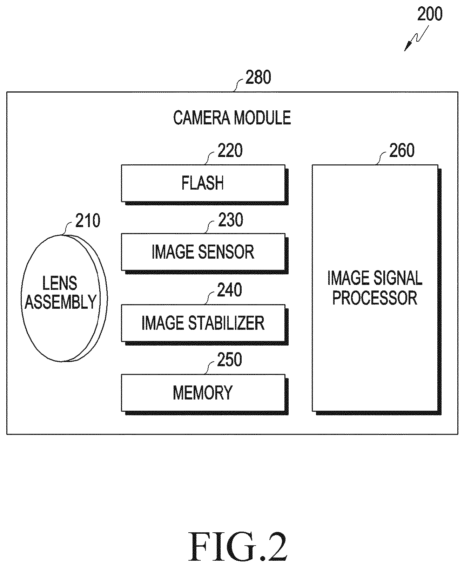

FIG. 2 is a block diagram 200 illustrating the camera module 280 according to an embodiment. Referring to FIG. 2, the camera module 280 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 280 may include a plurality of lens assemblies 210. In such a case, the camera module 280 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or the electronic device 101 including the camera module 280. This allows compensating for at least part of a negative effect (e.g., image blurring) by the movement on an image being captured. According to an embodiment, the image stabilizer 240 may sense such a movement by the camera module 280 or the electronic device 101 using a gyro sensor (not shown) or an acceleration sensor (not shown) disposed inside or outside the camera module 280. According to an embodiment, the image stabilizer 240 may be implemented, for example, as an optical image stabilizer.

The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display device 160, the electronic device 102, the electronic device 104, or the server 108) outside the camera module 280. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 280 having different attributes or functions. In such a case, at least one of the plurality of camera modules 280 may form, for example, a wide-angle camera and at least another of the plurality of camera modules 280 may form a telephoto camera. Similarly, at least one of the plurality of camera modules 280 may form, for example, a front camera and at least another of the plurality of camera modules 280 may form a rear camera.

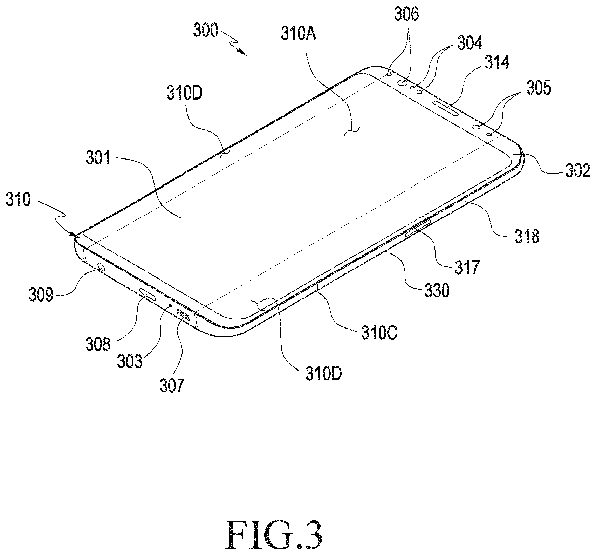

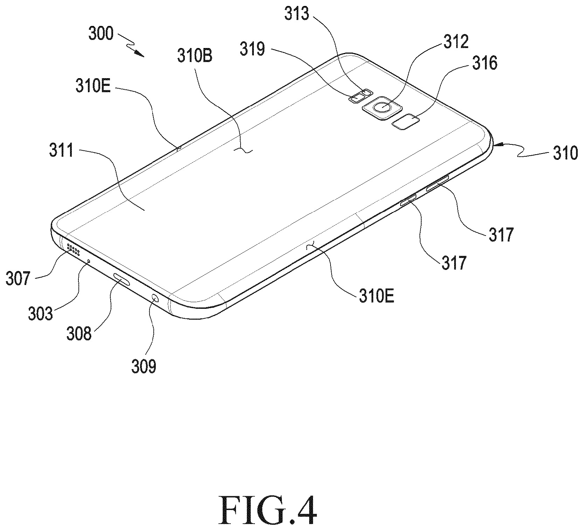

FIG. 3 is a perspective view illustrating the front face of an electronic device 300 (e.g., the electronic device 101 in FIG. 1) according to an embodiment. FIG. 4 is a perspective view illustrating the rear face of the electronic device 300 illustrated FIG. 3.

Referring to FIGs. 3 and 4, the electronic device 300 (e.g., the electronic device 101 in FIG. 1) according to an embodiment may include a housing 310 including a first face (or a front face) 310A, a second face (or a rear face) 310B, and a side face 310C surrounding a space between the first face 310A and the second face 310B. In another embodiment (not illustrated), the term "housing 310" may refer to a structure that includes at least a part of the first face 310A, a part of the second face 310B, and a part of the side face 310C of FIG. 3. According to an embodiment, at least a portion of the first face 310A may be include a substantially transparent front plate 302 (e.g., a glass plate or a polymer plate including various coating layers). In another embodiment, the front plate 302 is coupled to the housing 310 to form an inner space with the housing 310. In various embodiments, the term "inner space" may mean the inner space of the housing 310, which accommodates at least a part of a display 301 to be described later or the display device 160 in FIG. 1.

According to an embodiment, the second face 310B may be formed by a substantially opaque rear plate 311. The rear plate 311 may be made of, for example, coated or colored glass, ceramic, a polymer, or a metal (e.g., aluminum, stainless steel (STS), or magnesium), or a combination of two or more of these materials. The side face 310C may be formed by a side bezel structure (or a "side member") 318 coupled to the front plate 302 and the rear plate 311 and including a metal and/or a polymer. In an embodiment, the rear plate 311 and the side bezel structure 318 may be integrally formed, and may include the same material (e.g., a metal material such as aluminum).

In the illustrated embodiment, the front plate 302 may include, at the long opposite side edges thereof, two first areas 310D, which are bent from the first face 310A toward the rear plate 311 and extend seamlessly from the flat or central portion of the front plate 302. In the illustrated embodiment (see FIG. 4), the rear plate 311 may include, at the long opposite side edges thereof, two second areas 310E, which are bent from the second face 310B toward the front plate 302 and extend seamlessly from the flat or central portion of the front plate 302. In some embodiments, the front plate 302 (or the rear plate 311) may include only one of the first regions 310D (or the second regions 310E). In another embodiment, some of the first areas 310D and the second areas 310E may not be included. In the above embodiments, when viewed from a side of the electronic device 300, the side bezel structure 318 may have a first thickness (or width) on the side face in which the first areas 310D or the second areas 310E are not included (e.g., the side face in which the connector hole 308 is formed), and may have a second thickness, which is thinner than the first thickness, on the side face in which the first areas 310D or the second areas 310E are included (the side face in which the key input device 317 is disposed).

According to an embodiment, the electronic device 300 may include at least one of a display 301, audio modules 303, 307, and 314, sensor modules 304, 316, and 319, camera modules 305, 312, and 313, key input devices 317, light-emitting elements 306, and connector holes 308 and 309. In various embodiments, at least one of the components (e.g., the key input devices 317 or the light-emitting elements 306) may be omitted from the electronic device 300, or the electronic device 300 may additionally include the other components.

The display 301 (e.g., the display device 160 in FIG. 1) may be exposed through a substantial portion of, for example, the front plate 302. In an embodiment, at least a part of the display 301 may be exposed through the front plate 302 forming the first face 310A and the first areas 310D of the side faces 310C. In an embodiment, the edges of the display 301 may be formed to be substantially the same as the contour shape of the front plate 302 adjacent thereto. In another embodiment (not illustrated), the distance between the outer contour of the display 301 and the outer contour of the front plate 302 may be substantially constant and minimized in order to enlarge the exposed area of the display 301.

In another embodiment (not illustrated), a recess or an opening may be formed in a part of a screen display area (e.g., an active area) of the display 301 or an area out of the screen display area (e.g., an inactive area), and at least one of the audio module 314 (e.g., the audio module 170 in FIG. 1), the sensor module 304 (e.g., the sensor module 176 in FIG. 1), the camera module 305 (e.g., the camera module 180), and the light-emitting element 306 may be aligned with the recess or the opening. In another embodiment (not illustrated), at least one of the audio module 314, the sensor module 304, the camera module 305, the fingerprint sensor 316, and the light-emitting element 306 may be included in the rear face of the screen display area of the display 301. In another embodiment (not illustrated), the display 301 may be coupled to or disposed adjacent to a touch-sensing circuit, a pressure sensor that is capable of measuring the intensity of a touch (pressure), and/or a digitizer that detects a magnetic-field-type stylus pen. In some embodiments, at least some of the sensor modules 304 and 319 and/or at least some of the key input devices 317 may be disposed in the first areas 310D and/or the second areas 310E.

The audio modules 303, 307, and 314 may include a microphone hole 303 and speaker holes 307 and 314. The microphone hole 303 may include a microphone disposed therein so as to acquire external sound, and in various embodiments, multiple microphones may be disposed therein so as to detect the direction of sound. The speaker holes 307 and 314 may include an external speaker hole 307 and a phone call receiver hole 314. In some embodiments, the speaker holes 307 and 314 and the microphone hole 303 may be implemented as a single hole, or a speaker may be included without the speaker holes 307 and 314 (e.g., a piezo speaker).

The sensor modules 304, 316, and 319 may generate electrical signals or data values corresponding to an internal operating state or an external environmental condition of the electronic device 300. The sensor modules 304, 316, and 319 may include, for example, a first sensor module 304 (e.g., a proximity sensor) and/or a second sensor module (not illustrated) (e.g., a fingerprint sensor) disposed on the first face 310A of the housing 310, and/or a third sensor module 319 (e.g., a heart rate monitor (HRM) sensor) and/or a fourth sensor module 316 (e.g., a fingerprint sensor) disposed on the second face 310B of the housing 310. The fingerprint sensor may be disposed not only on the first face 310A (e.g., the display 301) of the housing 310, but also on the second face 310B. The electronic device 300 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 305, 312, and 313 may include a first camera device 305 disposed on the first face 310A of the electronic device 300, a second camera device 312 disposed on the second surface 310B, and/or a flash 313. The camera modules 305 and 312 may include one or more lenses, an image sensor, and/or an image signal processor. The flash 313 may include, for example, a light-emitting diode or a xenon lamp. In various embodiments, two or more lenses (e.g., an infrared camera lens, a wide-angle lens, and a telephoto lens) and image sensors may be disposed on one face of the electronic device 300.

The key input devices 317 may be disposed on the side face 310C of the housing 310. In another embodiment, the electronic device 300 may not include some or all of the above-mentioned key input devices 317, and a key input device 317, which is not included therein, may be implemented in another form, such as a soft key or the like on the display 301. In some embodiments, the key input devices may include a sensor module 316 disposed on the second face 310B of the housing 310.

The light-emitting element 306 may be disposed, for example, on the first face 310A of the housing 310. The light-emitting element 306 may provide, for example, the status information of the electronic device 300 in an optical form. In another embodiment, the light-emitting element 306 may provide a light source that is interlocked with, for example, the operation of the camera module 305. The light-emitting element 306 may include, for example, an LED, an IR LED, and a xenon lamp.

The connector holes 308 and 309 may include a first connector hole 308 that is capable of accommodating a connector (e.g., a USB connector) for transmitting and receiving power and/or data to and from an external electronic device, and/or a second connector hole 309 that is capable of accommodating a connector (e.g., an earphone jack) for transmitting and receiving an audio signal to and from an external electronic device.

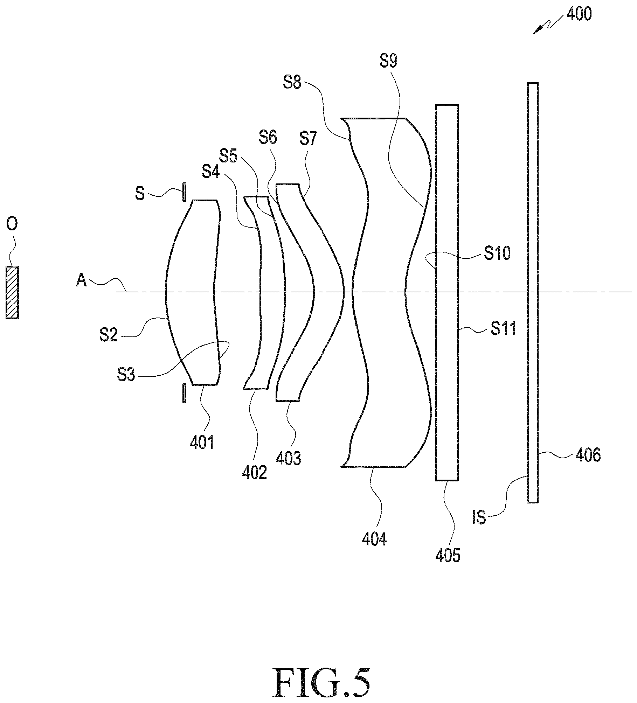

FIG. 5 is a view illustrating the configuration of a lens assembly 400 according to an embodiment of the invention.

Referring to FIG. 5, according to one of various embodiments, the lens assembly 400 (e.g., the lens assembly 210 in FIG. 2) includes a plurality of lenses 401, 402, 403, and 404 and may further include an image sensor 406. For example, the image sensor 406 may be mounted on an electronic device (e.g., the electronic device 101 or 300 in FIG. 1 or FIG. 3, respectively) or an optical device (e.g., the camera module 280 in FIG. 2), and the plurality of lenses 401, 402, 403, and 404 constituting the lens assembly 400 may be mounted on the electronic device or the optical device and be aligned with the image sensor 406. In an embodiment, the lens assembly 400 may be disposed in any one of the camera modules 305, 312, and 313 of FIG. 3 an FIG. 4.

According to an embodiment, at least one the plurality of lenses 401, 402, 403, and 404 may be a plastic aspherical lens, and the plurality of lenses 401, 402, 403, and 404 includes a first lens 401, a second lens 402, a third lens 403, and a fourth lens 404, which are sequentially disposed from the subject O side towards the image sensor 406. For example, the first to fourth lenses 401, 402, 403, and 404 are aligned on the optical axis A together with the image sensor 406. According to an embodiment, when each of the lens surfaces S2, S3, S4, S5, S6, S7, S8, and S9 of the first to fourth lenses 401, 402, 403, and 404 is a high-order aspherical surface, it is possible to implement an optical system having a low F-number in the range of 1.0 to 1.7 while reducing the number of lenses. In some embodiments, by designing the first to fourth lenses 401, 402, 403, and 404 such that the sum of the Abbe numbers thereof is 20 or more but does not exceed 125, it is possible to simplify the materials of the lenses. For example, each or at least one of the first to fourth lenses 401, 402, 403, and 404 may be implemented with a plastic aspherical lens.

According to an embodiment, the diaphragm S of the lens assembly 400 may be disposed in front of the first lens 401. According to an embodiment, the diaphragm S may be disposed between any two adjacent lenses among the first to fourth lenses 401, 402, 403, and 404. In some embodiments, the subject side surface S2, S4, S6, or S8 or the image sensor side surface S3, S5, S7, or S9 of any one of the first to fourth lenses 401, 402, 403, and 404 may serve as the diaphragm of the lens assembly 400.

In the following detailed description, the shape of a lens or a lens surface will be described using the expression "concave" or "convex." Unless stated otherwise, this may mean that the shape of the lens or the lens surface is concave or convex at least in the central portion intersecting the optical axis A. In addition, "concave" or "convex" may mean that the entire lens or lens surface is concave or convex, respectively.

According to an embodiment, one lens surface may have a shape having an inflection point, for example, a shape in which a portion of the lens surface is convex and another portion is concave. These portions may be distinguished from each other by designating one as the "center portion of the lens" and the other as the "peripheral portion of the lens," respectively, for example.

According to an embodiment, the first lens 401 has positive refractive power and the object side surface S2 thereof has a convex shape. When the first lens 401 has a positive refractive index, it is possible to reduce the total length of the lens assembly 400 (e.g., the distance from the subject side surface S2 of the first lens 401 to the imaging surface of the image sensor 406) and/or the outer diameters of the second to fourth lenses 402, 403, and 404. For example, the lens assembly 400 may be miniaturized using the refractive power of the first lens 401. Due to the convex shape of the first lens 401 toward the subject O, light rays from a wide angle may be incident on the object side surface S2.

According to an embodiment, the second lens 402 has positive refractive power, and the area through which the optical axis A passes, i.e., the center portion has a shape that is convex towards the subject O. In some embodiments, at least one of the subject side surface S4 and the image sensor side surface S5 of the second lens 402 may include an inflection point. For example, the subject O side surface S4 of the second lens 402 has a shape in which the center portion is convex towards the subject O, and the peripheral portion around the center portion is convex towards the image sensor 406 and in which the curvature radius of the center portion and the curvature radius of the peripheral portion may be different from each other. The shape of the subject side surface S4 as described above may enlarge a peripheral light quantity ratio.

According to an embodiment, the third lens 403 has negative refractive power, and the image sensor side surface S7 thereof may have a shape that is convex towards the image sensor 406. In some embodiments, at least one of the subject side surface S6 and the image sensor side surface S7 of the third lens 403 may include an inflection point.

According to an embodiment, the fourth lens 404 has positive refractive power. In an embodiment, the subject side surface S8 of the fourth lens 404 may have a shape in which the center portion intersecting the optical axis A is convex towards the subject O, and the image sensor side surface S9 may have a shape in which the center portion intersecting the optical axis A is concave towards the image sensor 406 and the peripheral portion is convex towards the image sensor 406.

According to an embodiment, the third lens 403 and the fourth lens 404 may help the lens assembly to capture a sufficient amount of peripheral light, and the refractive power or the shape of the lens surface of the fourth lens 404 may determine the angle of the outermost light rays incident on the imaging surface IS of the image sensor 406. For example, the angle at which light rays are incident on the imaging surface IS may be optimized using the refractive power of the fourth lens 404 or the shapes of the lens surfaces S8 and S9 of the fourth lens 404.

According to an embodiment, the lens assembly 400 may further include a band-pass filter 405. For example, the band-pass filter 405 may be disposed between the fourth lens 404 and the image sensor 406. In an embodiment, the band-pass filter 405 may substantially block visible light (e.g., having visible light transmittance ranging from 0.0001% to 1%), and may have maximum transmittance (e.g., transmittance ranging from 90% to 99%) with respect to light having a wavelength between 800 nm and 1000 nm (e.g., near infrared light). As the band-pass filter 405 is disposed as described above, light incident on the image sensor 406 may be substantially limited to light in a specific wavelength band (e.g., the near infrared region).

According to an embodiment, the band-pass filter 405 may transmit light having a specific wavelength between 800 nm and 1000 nm. For example, the band-pass filter 405 may transmit light in a bandwidth of about ±50 nm around a center wavelength of at least one of 850 nm, 940 nm, or 980 nm. In another embodiment, the band-pass filter 405 may have a half width of about ±30 nm from the center wavelength, and may block light outside a bandwidth of about ±50 nm or a half width of about ±30 nm from the center wavelength. In an embodiment, although the bandwidth or half bandwidth around a specific wavelength is described using exemplary numerical values, the disclosure is not limited to the exemplary numerical values. The band-pass filter 405 may be designed or manufactured to have appropriate optical characteristics depending on the required specifications of the lens assembly 400 or a camera module or an electronic device including the lens assembly 400.

According to an embodiment, in the lens assembly 400 including the first to fourth lenses 401, 402, 403, and 404 and/or the band pass filter 405, the sum of Abbe numbers of respective lenses 401, 402, 403, and 404 satisfies Equation 1 as follows.

$$\text{Equation 1}$$

$$20 \leq v1 + v2 + v3 + v4 \leq 125$$

Here, "v1" represents the Abbe number of the first lens 401, "v2" represents the Abbe number of the second lens 402, "v3" represents the Abbe number of the third lens 403, and "v4" represents the Abbe number of the fourth lens 404. The Abbe number vd of the d-th lens may be defined as a refractive index ratio with respect to a helium d line having a center wavelength of 587.56 nm, and may be calculated using Equation 2 as follows.

$$\text{Equation 2}$$

$$vd = \frac{nd - 1}{nC - nF}$$

Here, "nd" represents a refractive index at a 587.56 nm wavelength, "nC" represents a refractive index at a 656.27 nm wavelength, and "nF" represents a refractive index at a 486.413 nm wavelength.

By combining lenses that satisfy Equation 1 above, the materials of the lenses may be simplified. And by combining aspherical lenses having high refractive indices, it is possible to configure an optical system (e.g., the lens assembly 400), which is miniaturized while having high resolution, even with a small number of lenses (e.g., four lenses).

According to an embodiment, in the lens assembly 400, the ratio of the total focal length to the focal length of the first lens 401 may satisfy Equation 3 as follows.

$$\text{Equation 3}$$

$$0.2 \leq \frac{f}{f_1} \leq 0.65$$

Here, "f" represents the total focal length of the lens assembly 400, "$f_1$" represents the focal length of the first lens 401, and the lens assembly 400 satisfying the numerical range of [Equation 3] may have brightness suitable for detecting distance information (e.g., depth information) of a subject or a subject area.

According to an embodiment, in the lens assembly 400, the ratio of the total focal length to the focal length of the second lens 402 may satisfy Equation 4 as follows.

$$Equation\ 4$$

$$0.02 \leq \frac{f}{f_2} \leq 0.65$$

Here, "f" represents the total focal length of the lens assembly 400, and "$f_2$" represents the focal length of the second lens 402. According to an embodiment, the size of the lens assembly 400 may be substantially determined by the sizes of the first lens 401 and the second lens 402. In some embodiments, the lens assembly may be miniaturized when the ratio of the focal length between the first lens 401 and the second lens 402 satisfies Equation 5 as follows.

$$Equation\ 5$$

$$0.05 < \frac{f_1}{f_2} \leq 1.2$$

Here, "$f_1$" represents the focal length of the lens assembly 401, and "$f_2$" represents the focal length of the second lens 402.

According to an embodiment, the ratio between the curvature radius of the second lens 402 and the curvature radius of the fourth lens 404 may satisfy Equation 6 as follows.

$$Equation\ 6$$

$$0.1 \leq \left| \frac{R_9}{R_5} \right| \leq 0.8$$

Here, "$R_5$" represents the curvature radius of the image sensor side surface S5 of the second lens 402, and "$R_9$" represents the curvature radius of the image sensor side surface S9 of the fourth lens 404. The image sensor side surface S5 of the second lens 402 may be convex or concave towards the image sensor 406 at the center portion intersecting the optical axis A, and the image sensor side surface S9 of the fourth lens 404 may have a shape that is concave towards the image sensor 406 at the central portion intersecting the optical axis A. When the shapes or the curvature radii of the image sensor side surfaces S5 and S9 of the second lens 402 and the fourth lens 404, respectively, satisfy Equation 6 above, the lens assembly 400 may obtain a good peripheral light amount ratio, for example, a peripheral light amount ratio of 45% or more.

The lens data of the lens assembly 400 are represented in Table 1 below, in which "S1 (aperture stop)" indicates an aperture surface of the diaphragm S, and "S2 to S11" indicate the surfaces of lenses 401, 402, 403, and 404 and the band-pass filter 405. The lens assembly 400 may have a focal length of 3.49 mm, an F-number of 1.44, and a half angle of view of 38.8 degrees with respect to light having a wavelength of 940 nm, and may satisfy at least one of the above-described equations.

[Table 1]

| | Curvature radius | Thickness or Air gap | Refractive index | Abbe number | Focal distance |
|---|---|---|---|---|---|
| S1 (aperture stop) | INFINITY | -0.250 | | | |
| S2 | 1.906 | 0.663 | 1.50648 | 8.96 | 6.013 |
| S3 | 4.498 | 0.615 | | | |
| S4 | 15.933 | 0.330 | 1.64165 | 19.23 | 6.057 |
| S5 | -5.099 | 0.383 | | | |
| S6 | -0.850 | 0.400 | 1.64165 | 19.23 | -19.71 |
| S7 | -1.079 | 0.120 | | | |
| S8 | 1.404 | 0.711 | 1.5218 | 56.5 | 21.897 |

(continued)

|  | Curvature radius | Thickness or Air gap | Refractive index | Abbe number | Focal distance |
|---|---|---|---|---|---|
| S9 | 1.323 | 0.398 | | | |
| S10 | INFINITY | 0.300 | 1.50838 | 64.2 | INFINITY |
| S11 | INFINITY | 0.950 | | | |

The aspherical coefficients of the first to fourth lenses 401, 402, 403, and 404 are represented in Tables 2 and 3 below, and may be calculated using Equation 7 as follows.

Equation 7

$$x=\frac{c'y^2}{1+\sqrt{1-(K+1)c'^2y^2}}+Ay^4+By^6+Cy^8+Dy^{10}+Ey^{12}+Fy^{14}+Gy^{16}+Hy^{18}+Jy^{20}$$

Here, "x" represents the distance from a lens vertex in the direction of the optical axis A, "y" represents the distance in the direction perpendicular to the optical axis A, "c" represents the inverse of the curvature radius at the vertex of the lens, "K" represents a Conic constant, and "A", "B", "C", "D", "E", "F", "G", "H", and "J" represent aspherical coefficients, respectively.

[Table 2]

|  | S2 | S3 | S4 | S5 |
|---|---|---|---|---|
| K | -0.59144 | -6.58598 | 8.88230 | -6.35951 |
| A | -4.6190E-03 | -7.1318E-03 | -6.6898E-02 | -4.8972E-02 |
| B | 1.6415E-02 | -1.1447E-02 | 4.7271E-03 | 3.2121E-02 |
| C | -2.9718E-02 | -6.2396E-03 | -1.5169E-01 | -1.4626E-01 |
| D | 2.1137E-02 | -9.5806E-03 | 2.2637E-01 | 1.4613E-01 |
| E | -1.2018E-02 | 1.9333E-03 | -2.4801E-01 | -4.7522E-02 |
| F | 5.0859E-03 | 4.1008E-04 | 1.5617E-01 | 4.8639E-03 |
| G | -2.1892E-03 | 0.0000E+00 | -3.5624E-02 | 0.0000E+00 |
| H | 0.0000E+00 | 0.0000E+00 | 0.0000E+00 | 0.0000E+00 |
| J | 0.0000E+00 | 0.0000E+00 | 0.0000E+00 | 0.0000E+00 |

[Table 3]

|  | S6 | S7 | S8 | S9 |
|---|---|---|---|---|
| K | -3.00448 | -2.13985 | -12.67345 | -6.28814 |
| A | -1.5745E-01 | -1.6310E-01 | 4.3562E-02 | -2.0000E-02 |
| B | 5.3996E-01 | 5.0465E-01 | -1.1180E-01 | -5.3866E-03 |
| C | -1.0764E+00 | -7.9808E-01 | 8.5368E-02 | 5.3080E-03 |
| D | 1.3058E+00 | 7.5701E-01 | -4.0113E-02 | -2.6263E-03 |
| E | -8.7190E-01 | -4.1702E-01 | 1.0570E-02 | 6.4691E-04 |
| F | 3.0093E-01 | 1.2250E-01 | -1.3845E-03 | -8.0921E-05 |
| G | 3.0093E-01 | -1.4624E-02 | 6.9852E-05 | 4.1163E-06 |
| H | 0.0000E+00 | 0.0000E+00 | 0.0000E+00 | 0.0000E+00 |
| J | 0.0000E+00 | 0.0000E+00 | 0.0000E+00 | 0.0000E+00 |

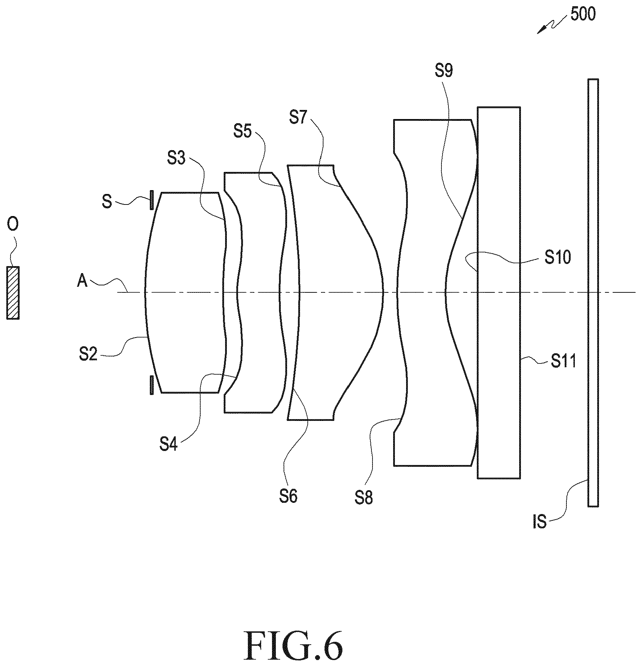

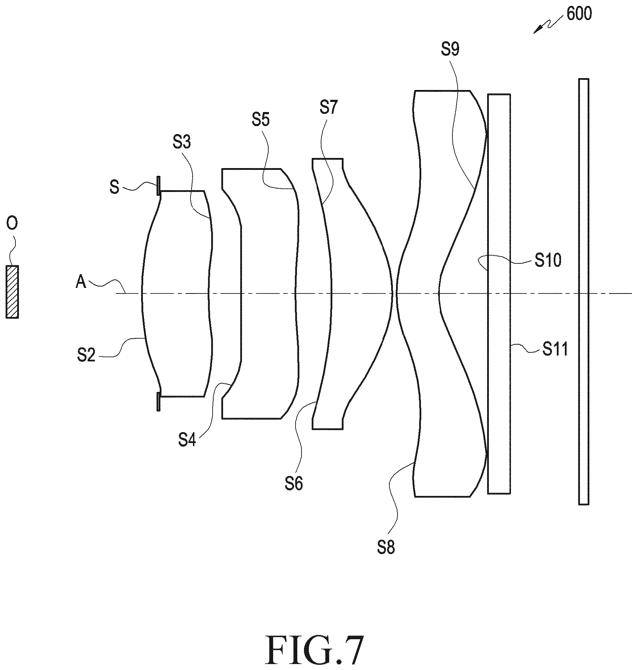

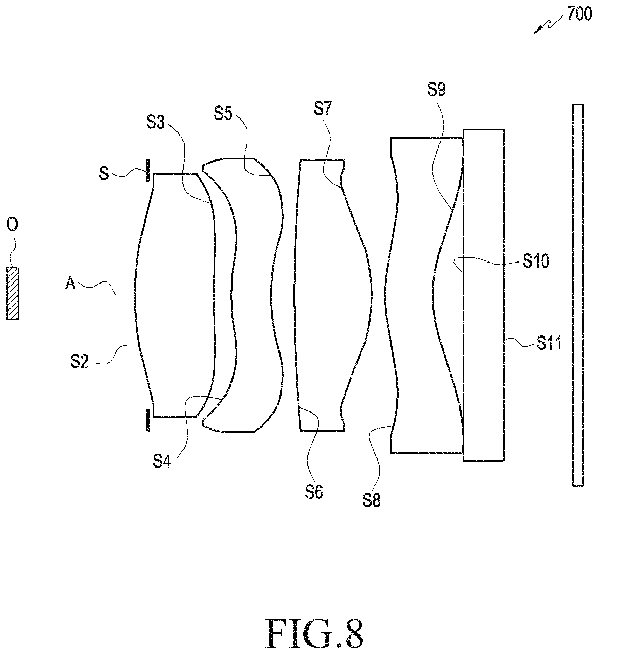

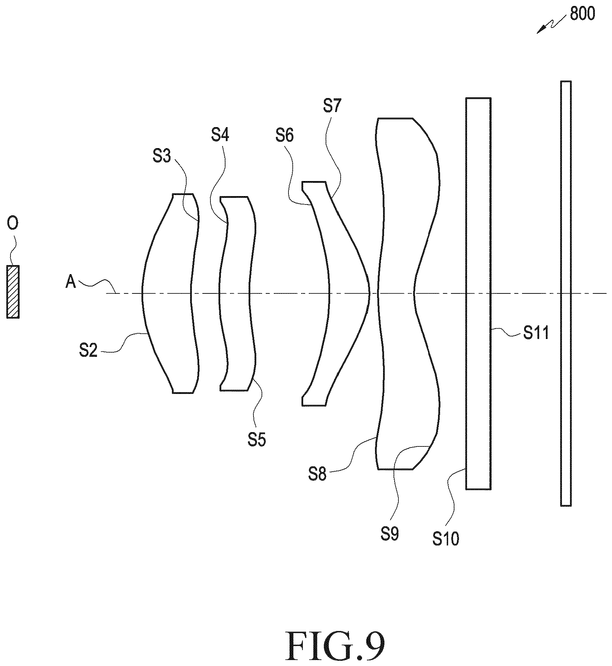

FIG. 6 is a view illustrating the configuration of a lens assembly 500 according to a second embodiment, FIG. 7 is a view illustrating the configuration of a lens assembly 600 according to a third embodiment, FIG. 8 is a view illustrating the configuration of a lens assembly 700 according to a fourth embodiment, and FIG. 9 is a view illustrating the configuration of a lens assembly 800 according to a fifth embodiment.

The lens data and aspherical coefficients of the lens assembly 500 of FIG. 6 are represented in Table 4, Table 5, and Table 6 below, in which "S1 (aperture stop)" indicates the aperture surface of the diaphragm S and "S2 to S11" indicate the surfaces of the lenses and the band-pass filter. The lens assembly 500 may have a focal length of 1.92 mm, an F-number of 1.65, and a half angle of view of 34.4 degrees with respect to light having a wavelength of 940 nm, and may satisfy at least one of the above-described equations.

[Table 4]

|  | Curvature radius | Thickness or Air gap | Refractive index | Abbe number | Focal distance |
|---|---|---|---|---|---|
| S1 (aperture stop) | INFINITY | -0.050 |  |  |  |
| S2 | 1.705 | 0.563 | 1.56576 | 30.19 | 7.116 |
| S3 | 2.603 | 0.099 |  |  |  |
| S4 | 1.429 | 0.297 | 1.613 | 23.9 | 8.207 |
| S5 | 1.839 | 0.138 |  |  |  |
| S6 | -2.704 | 0.600 | 1.613 | 23.9 | 1.941 |
| S7 | -0.896 | 0.100 |  |  |  |
| S8 | 1.211 | 0.350 | 1.613 | 23.9 | -4.27 |
| S9 | 0.737 | 0.228 |  |  |  |
| S10 | INFINITY | 0.300 | 1.50838 | 64.2 | INFINITY |
| S11 | INFINITY | 0.500 |  |  |  |

[Table 5]

|  | S2 | S3 | S4 | S5 |
|---|---|---|---|---|
| K | -99.00000 | 10.37842 | -6.17582 | -1.54837 |
| A | 1.8584E+00 | -5.7294E-01 | -3.9736E-01 | 1.5268E-01 |
| B | -1.6051E+01 | -3.1990E+00 | -3.2908E+00 | -2.3589E+00 |
| C | 1.0111E+02 | 2.8248E+01 | 1.0801E+01 | 1.6999E+00 |
| D | -4.3162E+02 | -1.4414E+02 | -3.1208E+01 | 1.5357E+01 |
| E | 1.2168E+03 | 4.8032E+02 | 1.0025E+02 | -5.5294E+01 |
| F | -2.2266E+03 | -1.0557E+03 | -2.6638E+02 | 8.1245E+01 |
| G | 2.5362E+03 | 1.4508E+03 | 4.5256E+02 | -5.8347E+01 |
| H | -1.6293E+03 | -1.1159E+03 | -4.2235E+02 | 1.7810E+01 |
| J | 4.4967E+02 | 3.6539E+02 | 1.6526E+02 | -8.9881E-01 |

[Table 6]

|  | S6 | S7 | S8 | S9 |
|---|---|---|---|---|
| K | -75.80152 | -6.97655 | 0.19578 | -2.82966 |
| A | -5.9987E-02 | -9.1393E-01 | -8.8096E-01 | -3.7630E-01 |
| B | 1.7447E+00 | 1.9448E+00 | 1.5390E+00 | -2.4413E-01 |
| C | -1.2825E+01 | -2.1509E-01 | -7.8613E+00 | 2.6949E+00 |
| D | 4.8908E+01 | -1.9226E+01 | 3.0926E+01 | -7.1651E+00 |

(continued)

|  | S6 | S7 | S8 | S9 |
|---|---|---|---|---|
| E | -1.1134E+02 | 7.7740E+01 | -7.6661E+01 | 1.0626E+01 |
| F | 1.5534E+02 | -1.5653E+02 | 1. 1770E+02 | -9.6219E+00 |
| G | -1.2963E+02 | 1.8042E+02 | -1.0917E+02 | 5.2651E+00 |
| H | 5.9302E+01 | -1.1229E+02 | 5.6067E+01 | -1.5985E+00 |
| J | -1.1433E+01 | 2.9075E+01 | -1.2265E+01 | 2.0646E-01 |

The lens data and aspherical coefficients of the lens assembly 600 of FIG. 7 are represented in Table 7, Table 8, and Table 9 below, in which "S1 (aperture stop)" indicates the aperture surface of the diaphragm S and "S2 to S11" indicate the surfaces of the lenses and the band-pass filter. The lens assembly 600 may have a focal length of 2.71 mm, an F-number of 1.43, and a half angle of view of 37.6 degrees with respect to light having a wavelength of 850 nm and may satisfy at least one of the above-described equations.

[Table 7]

|  | Curvature radius | Thickness or Air gap | Refractive index | Abbe number | Focal distance |
|---|---|---|---|---|---|
| S1 (aperture stop) | INFINITY | -0.170 |  |  |  |
| S2 | 2.096 | 0.683 | 1.56816 | 30.19 | 5.364 |
| S3 | 5.921 | 0.296 |  |  |  |
| S4 | 6.996 | 0.558 | 1.61561 | 23.89 | 68.736 |
| S5 | 8.127 | 0.365 |  |  |  |
| S6 | -2.039 | 0.588 | 1.61561 | 23.89 | 2.824 |
| S7 | -1.041 | 0.050 |  |  |  |
| S8 | 1.074 | 0.422 | 1.61561 | 23.89 | -5.508 |
| S9 | 0.694 | 0.487 |  |  |  |
| S10 | INFINITY | 0.210 | 1.50984 | 64.2 | INFINITY |
| S11 | INFINITY | 0.590 |  |  |  |

[Table 8]

|  | S2 | S3 | S4 | S5 |
|---|---|---|---|---|
| K | -0.05185 | 26.79241 | 39.71105 | 23.05479 |
| A | -2.0191E-02 | -1.0892E-01 | -1.3125E-01 | 2.1342E-02 |
| B | -7.4022E-03 | -1.6822E-02 | -1.8374E-01 | -1.5331E-01 |
| C | -3.1624E-02 | -1.3861E-01 | 1.7485E-01 | 1.0159E-01 |
| D | 3.0040E-02 | 1.7800E-01 | -3.2718E-01 | -8.9655E-02 |
| E | -1.0601E-02 | -1.2608E-01 | 2.4131E-01 | 4.2120E-02 |
| F | -1.1826E-02 | 3.7089E-02 | 8.5310E-03 | -6.1746E-03 |
| G | -1.8279E-04 | -2.1091E-03 | -4.0904E-02 | -1.9828E-05 |
| H | 0.0000E+00 | 0.0000E+00 | 0.0000E+00 | 0.0000E+00 |
| J | 0.0000E+00 | 0.0000E+00 | 0.0000E+00 | 0.0000E+00 |

[Table 9]

|  | S6 | S7 | S8 | S9 |
|---|---|---|---|---|
| K | -14.53670 | -1.68626 | -4.78986 | -3.35003 |
| A | 1.1405E-01 | 9.4855E-02 | -6.2375E-02 | -7.6433E-02 |
| B | -1.9799E-01 | -1.3839E-01 | -3.7118E-02 | 1.4180E-02 |
| C | 2.8127E-01 | 1.3644E-01 | 2.8661E-02 | -1.7195E-03 |
| D | -2.8344E-01 | -9.8208E-02 | -6.8409E-03 | 7.9145E-04 |
| E | 1.5876E-01 | 6.5929E-02 | 2.1528E-04 | -5.5468E-04 |
| F | -4.6477E-02 | -2.4937E-02 | 2.0078E-04 | 1.2934E-04 |
| G | 5.6304E-03 | 3.7897E-03 | -2.6541E-05 | -9.8225E-06 |
| H | 0.0000E+00 | 0.0000E+00 | 0.0000E+00 | 0.0000E+00 |
| J | 0.0000E+00 | 0.0000E+00 | 0.0000E+00 | 0.0000E+00 |

The lens data and aspherical coefficients of the lens assembly 700 of FIG. 8 are represented in Table 10, Table 11, and Table 12 below, in which "S1 (aperture stop)" indicates the aperture surface of the diaphragm S and "S2 to S11" indicate the surfaces of the lenses and the band-pass filter. The lens assembly 700 may have a focal length of 2.01 mm, an F-number of 1.23, and a half angle of view of 36.1 degrees with respect to light having a wavelength of 940 nm, and may satisfy at least one of the above-described equations.

[Table 10]

|  | Curvature radius | Thickness or Air gap | Refractive index | Abbe number | Focal distance |
|---|---|---|---|---|---|
| S1 (aperture stop) | INFINITY | -0.100 |  |  |  |
| S2 | 1.792 | 0.579 | 1.613 | 23.9 | 6.711 |
| S3 | 2.786 | 0.128 |  |  |  |
| S4 | 1.259 | 0.296 | 1.613 | 23.9 | 20.68 |
| S5 | 1.272 | 0.175 |  |  |  |
| S6 | -6.425 | 0.562 | 1.613 | 23.9 | 2.21 |
| S7 | -1.156 | 0.100 |  |  |  |
| S8 | 1.072 | 0.350 | 1.613 | 23.9 | -7.914 |
| S9 | 0.769 | 0.227 |  |  |  |
| S10 | INFINITY | 0.300 | 1.50838 | 64.2 | INFINITY |
| S11 | INFINITY | 0.502 |  |  |  |

[Table 11]

|  | S2 | S3 | S4 | S5 |
|---|---|---|---|---|
| K | -68.38379 | 8.01173 | -3.32863 | -1.69326 |
| A | 1.1826E+00 | -6.8670E-01 | -7.6872E-01 | 1.5163E-03 |
| B | -7.8960E+00 | -4.2143E-01 | -3.1647E-01 | -2.1957E+00 |
| C | 4.0418E+01 | 7.1638E+00 | -9.0472E+00 | 2.5703E+00 |
| D | -1.4714E+02 | -3.5503E+01 | 6.5850E+01 | 1.0479E+01 |
| E | 3.6452E+02 | 1.0874E+02 | -1.9846E+02 | -4.4377E+01 |
| F | -5.9949E+02 | -2.1449E+02 | 3.4197E+02 | 7.2759E+01 |
| G | 6.2442E+02 | 2.6150E+02 | -3.5177E+02 | -6.2311E+01 |

(continued)

|   | S2 | S3 | S4 | S5 |
|---|---|---|---|---|
| H | -3.7254E+02 | -1.7876E+02 | 1.9848E+02 | 7.2759E+01 |
| J | 9.6812E+01 | 5.2133E+01 | -4.6269E+01 | -4.9808E+00 |

[Table 12]

|   | S6 | S7 | S8 | S9 |
|---|---|---|---|---|
| K | -99.00000 | -33.82895 | -0.32309 | -4.43967 |
| A | 4.6614E-01 | -2.3354E+00 | -1.3123E+00 | -2.1389E-01 |
| B | -4.1358E-01 | 1.4377E+01 | 3.7005E+00 | 4.7883E-02 |
| C | -1.0257E+00 | -6.1458E+01 | -1.0778E+01 | 4.8005E-01 |
| D | 1.2505E+00 | 1.8359E+02 | 2.2199E+01 | -1.5142E+00 |
| E | 7.6276E+00 | -3.7361E+02 | -3.1022E+01 | 2.3882E+00 |
| F | -2.6838E+01 | 5.0770E+02 | 2.8518E+01 | -2.2527E+00 |
| G | 3.6385E+01 | -4.3993E+02 | -1.6466E+01 | 1.2738E+00 |
| H | -2.2865E+01 | 2.1960E+02 | 5.4440E+00 | -3.9652E-01 |
| J | 5.5171E+00 | -4.7939E+01 | -7.9850E-01 | 5.1958E-02 |

The lens data and aspherical coefficients of the lens assembly 800 of FIG. 9 are represented in Table 13, Table 14, and Table 15 below, in which the effective diameter of the image sensor side surface S3 of the first lens may substantially serve as a diaphragm for the lens assembly 800. In an embodiment, the subject side surface S2 of the first lens may be coupled to a structure for mounting or fixing the lens assembly 800, and the structure may serve as a mechanical diaphragm, which controls light beams incident on the periphery so as to enhance the periphery performance. In the following Table 13, "S1" may refer to the surface of the structure that is coupled to the subject side surface S2 of the first lens. "S2 to S11" indicate the surfaces of the lenses and the band-pass filter. The lens assembly 800 may have a focal length of 3.89 mm, an F-number of 1.45, a half angle of view of 35.7 degrees with respect to light having a wavelength of 940 nm and may satisfy at least one of the above-described equations.

[Table 13]

|   | Curvature radius | Thickness or Air gap | Refractive index | Abbe number | Focal distance |
|---|---|---|---|---|---|
| S1 | INFINITY | *-0.150* |  |  |  |
| S2 | 2.084 | 0.614 | 1.53541 | 56.09 | 9.7 |
| S3 (aperture stop) | 3.123 | 0.366 |  |  |  |
| S4 | 2.667 | 0.376 | 1.64255 | 19.23 | 10.917 |
| S5 | 4.066 | 1.017 |  |  |  |
| S6 | -2.785 | 0.490 | 1.64255 | 19.23 | 2.788 |
| S7 | -1.165 | 0.108 |  |  |  |
| S8 | 2.370 | 0.461 | 1.64255 | 19.23 | -3.018 |
| S9 | 0.985 | 0.668 |  |  |  |
| S10 | INFINITY | 0.300 | 1.50838 | 64.2 | INFINITY |
| S11 | INFINITY | 0.703 |  |  |  |

[Table 14]

|   | S2 | S3 | S4 | S5 |
|---|---|---|---|---|
| K | -0.98531 | -7.99959 | 0.41056 | 1.08664 |

(continued)

|  | S2 | S3 | S4 | S5 |
|---|---|---|---|---|
| A | -4.8876E-03 | -1.8023E-02 | -4.8978E-02 | -5.2938E-03 |
| B | 6.3676E-03 | -1.3422E-02 | -3.1622E-02 | -4.8831E-02 |
| C | -1.4707E-02 | -5.2194E-03 | -1.4098E-02 | -8.1103E-03 |
| D | 9.5187E-03 | 1.0960E-03 | -8.2401E-03 | 6.0295E-03 |
| E | -3.1780E-03 | 0.0000E+00 | 1.1868E-02 | 1.5868E-03 |
| F | 0.0000E+00 | 0.0000E+00 | -2.4533E-03 | -7.7860E-04 |
| G | 0.0000E+00 | 0.0000E+00 | 0.0000E+00 | 0.0000E+00 |
| H | 0.0000E+00 | 0.0000E+00 | 0.0000E+00 | 0.0000E+00 |
| J | 0.0000E+00 | 0.0000E+00 | 0.0000E+00 | 0.0000E+00 |

[Table 15]

|  | S6 | S7 | S8 | S9 |
|---|---|---|---|---|
| K | -3.47405 | -3.28059 | -3.28059 | -3.28059 |
| A | 3.4042E-02 | -3.2322E-02 | -3.2322E-02 | -3.2322E-02 |
| B | -4.2380E-02 | 6.2648E-02 | 6.2648E-02 | 6.2648E-02 |
| C | 3.7445E-02 | -9.3393E-02 | -9.3393E-02 | -9.3393E-02 |
| D | -1.2497E-02 | 9.5938E-02 | 9.5938E-02 | 9.5938E-02 |
| E | 0.0000E+00 | -4.7772E-02 | -4.7772E-02 | -4.7772E-02 |
| F | 0.0000E+00 | 1.0888E-02 | 1.0888E-02 | 1.0888E-02 |
| G | 0.0000E+00 | -8.9235E-04 | -8.9235E-04 | -8.9235E-04 |
| H | 0.0000E+00 | 0.0000E+00 | 0.0000E+00 | 0.0000E+00 |
| J | 0.0000E+00 | 0.0000E+00 | 0.0000E+00 | 0.0000E+00 |

Each of the lenses to be combined in the lens assemblies 400, 500, 600, 700, and 800 may have a low Abbe number to simplify the lens material. For example, by utilizing a plastic material in manufacturing each lens, it may be easy to implement an aspherical lens having a high refractive index, which enables the lens assembly to be miniaturized. Such a lens assembly may be easily mounted on a miniaturized electronic device such as a mobile communication terminal.

Referring again to FIGs. 1 to 4, a camera module or an electronic device (e.g., the camera module 280 in FIG. 2 or the electronic device 300 in FIG. 3) including the above-described lens assembly 400, 500, 600, 700, or 800 will be described.

According to various embodiments, the lens assembly 400, 500, 600, 700, or 800 described above may be provided as the lens assembly 210 of FIG. 2. In an embodiment, a camera module (e.g., the camera module 280 in FIG. 2) including such a lens assembly 400, 500, 600, 700, or 800 may be implemented as the camera module 305, 312, or 313 in FIG. 3 or FIG. 4. In some embodiments, one of the camera modules 312 and 313 disposed on the rear face of the electronic device 300 of FIG. 3 (hereinafter, referred to as a "first camera 313") may include the lens assembly 400, 500, 600, 700, or 800 described above and may detect distance information on a subject or a subject area using near infrared rays. The other one of the camera modules 312 (hereinafter referred to as a "second camera 312") is a camera for capturing color or black and white images, and the second camera 312 may acquire, for example, second information on the subject. According to an embodiment, the second information may include at least one of color information, brightness information, chroma information, and contrast information of the subject. In some embodiments, a plurality of second cameras 312 may be disposed on the rear face of the electronic device 300. For example, the first camera 313 is provided as a near infrared camera that detects distance information of a subject area, one of the plurality of second cameras 312 may be provided as a telephoto camera, and another one of the plurality of second cameras 312 may be provided as a wide-angle camera.

According to various embodiments, a camera module (e.g., the camera module 280 in FIG. 2) including the lens assembly 400, 500, 600, 700, or 800 may be used for security purposes in, for example, public spaces or living spaces because the outer diameters of the lenses or the total length of the lens assembly can be relatively freely altered depending on desired performance of the lens assemblies. For example, the lens assembly 400, 500, 600, 700, or 800 or the camera module 280 may be utilized for a closed-circuit camera for security, a camera for recognizing an object in a vehicle, or a thermal imaging camera. In another embodiment, the lens assembly 400, 500, 600, 700, or 800 may be manufactured to have a total length of about several mm. For example, the lens assembly 400, 500, 600, 700, or 800 may be mounted on a personal electronic device such as a mobile communication terminal to allow the electronic device to detect distance information on a subject or a subject area, so that the electronic device (e.g., the electronic device 300 in FIG. 3 or FIG. 4) is capable of providing the user with functions such as object recognition, augmented reality, or 3D scanning.

According to an embodiment, the electronic device 300 (e.g., the processor 120 of FIG. 1 or the image signal processor 260 of FIG. 2) detects distance information of a subject or a subject area on the basis of the first information acquired through the first camera 313. In an embodiment, the processor 120 or the image signal processor 260 may generate a subject image by synthesizing the second information acquired through the second camera 312 with the first information. For example, by processing the image acquired through the second camera 312 using the distance information acquired through the first camera 313, it is possible to apply various visual effects to the captured image. In some embodiments, in synthesizing the first information and the second information with each other, the processor 120 or the image signal processor 260 may generate a subject image having a 3D character shape through a process of emphasizing a specific portion of the subject image acquired from the second information on the basis of the first information.

According to an embodiment, the electronic device 300 emits light (e.g., infrared rays or near infrared rays) towards a subject using a light source device, and the first camera 313 may detect the first information on the subject (e.g., depth information) by detecting light emitted from the light source device and reflected by the subject. In an embodiment, like the light-emitting device 306 of the electronic device 300, the light source device may be disposed on the rear face of the electronic device 300, and may include an infrared light-emitting diode or a near infrared laser light source.

According to an embodiment, the lens assembly 400, 500, 600, 700, or 800 may be mounted on the camera module 305 in front of the electronic device 300. According to an embodiment, the lens assembly 400, 500, 600, 700, or 800 may include a band-pass filter (e.g., the band-pass filter 405 in Figure 4) so as to transmit light having a specific wavelength (e.g., $840 \pm 5$ nm or $940 \pm 5$ nm) and to block light having other wavelengths. For example, when provided with the lens assembly 400, 500, 600, 700, or 800, the camera module 305 is capable of detecting distance information on a subject or a subject area by detecting light emitted from the light emitting element 306 and reflected by the subject.

As described above, according to an embodiment, a lens assembly (e.g., the lens assembly 400, 500, 600, 700, or 800 in FIGS. 5 to 9) includes: a first lens (e.g., the first lens 401 in FIG. 5) having positive refractive power, a subject side surface of the first lens having a convex shape towards a subject; a second lens (e.g., the second lens 402 in FIG. 5) having positive refractive power, a subject side surface of the second lens including a center portion intersecting an optical axis having a convex shape towards the subject and a peripheral portion around the center portion and having a convex shape towards an image sensor; a third lens (e.g., the third lens 403 in FIG. 5) having negative refractive power; and a fourth lens (e.g., the fourth lens 404 in FIG. 5) having positive refractive power. The first lens, the second lens, the third lens, and the fourth lens are sequentially arranged from the subject to the image sensor along the optical axis, and the sum of Abbe numbers of the first lens, the second lens, the third lens, and the fourth lens satisfies Conditional Expression 1 as follows.
$$20 \leq v1 + v2 + v3 + v4 \leq 125$$

Here, "v1" represents the Abbe number of the first lens, "v2" represents the Abbe number of the second lens, "v3" represents the Abbe number of the third lens, and "v4" represents the Abbe number of the fourth lens.

According to an embodiment, at least one of the first lens, the second lens, the third lens, and the fourth lens may be a plastic aspherical lens.

According to an embodiment, the lens assembly described above may further include a band-pass filter (e.g., the band-pass filter 405 in FIG. 5) disposed between the fourth lens and the image sensor, and the band-pass filter may have a transmittance ranging from 90% to 99% with respect to light having a wavelength between 800 nm to 1000 nm, and a transmittance ranging from 0.0001% to 1% with respect to visible light.

According to an embodiment, the image sensor side surface of the third lens may have a convex shape towards the image sensor at least in a center portion of the image sensor side surface of the third lens intersecting the optical axis.

According to an embodiment, the subject side surface of the fourth lens may have a convex shape towards the subject at least in a center portion of the subject side surface of the fourth lens intersecting the optical axis, and the image sensor side surface of the fourth lens may have a concave shape towards the image sensor at least in a center portion of the image sensor side surface of the fourth lens intersecting the optical axis.

According to an embodiment, the ratio of the total focal length of the lens assembly to the focal length of the first lens may satisfy Conditional Expression 2 as follows.
$$0.2 \leq \frac{f}{f_1} \leq 0.65$$

Here, "f" represents the total focal length of the lens assembly, and "$f_1$" represents the focal length of the first lens.

According to an embodiment, the ratio of the total focal length of the lens assembly to the focal length of the

$$0.02 \le \frac{f}{f_2} \le 0.65$$

second lens may satisfy Conditional Expression 3 as follows.

Here, "f" represents the total focal length of the lens assembly, and "$f_2$" represents the focal length of the second lens.

According to an embodiment, the ratio of the focal length of the first lens to the focal length of the second lens may satisfy Conditional Expression 4 as follows. $0.05 \le \frac{f_1}{f_2} \le 1.2$

Here, "$f_1$" represents the focal length of the first lens, and "$f_2$" represents the focal length of the second lens.

According to an embodiment, the ratio of the curvature radius of the image sensor side surface of the fourth lens to the curvature radius of the image sensor side surface of the second lens may satisfy Conditional Expression 5 as follows.

$$0.1 \le \left| \frac{R_9}{R_5} \right| \le 0.8$$

Here, "$R_5$" represents the curvature radius of the image sensor side surface of the second lens, and "$R_9$" represents the curvature radius of the image sensor side surface of the fourth lens.

According to an embodiment, among the image sensor side surface of the second lens and the image sensor side surface of the fourth lens, at least the image sensor side surface of the fourth lens may have a concave shape towards the image sensor.

According to an embodiment, an electronic device (e.g., the electronic device 101 or 300 in FIG. 1, FIG. 3, or FIG. 4) includes: a first camera (e.g., the camera module 305 or 313 in FIG. 3 or FIG. 4) including a lens assembly (e.g., the lens assembly 400, 500, 600, 700, or 800 in FIGS. 5 to 9), and configured to acquire first information on a subject from light incident through the lens assembly; at least one second camera (e.g., the camera module 312 in FIG. 3 or FIG. 4) configured to acquire second information on the subject different from the first information; and a processor or an image signal processor (e.g., the processor 120 in FIG. 1 or the image signal processor 260 in FIG. 2) configured to detect distance information of the subject based on the first information. The lens assembly includes: a first lens having positive refractive power, a subject side surface of the first lens having a convex shape towards the subject; a second lens having positive refractive power, a subject side surface of the second lens including a center portion intersecting an optical axis having a convex shape towards the subject and a peripheral portion around the center portion and having a convex shape towards an image sensor; a third lens having negative refractive power; and a fourth lens having positive refractive power. The first lens, the second lens, the third lens, and the fourth lens are sequentially arranged from the subject to the image sensor along the optical axis, and the sum of Abbe numbers of the first lens, the second lens, the third lens, and the fourth lens satisfies Conditional Expression 6 as follows. $20 \le v1 + v2 + v3 + v4 \le 125$

Here, "v1" represents the Abbe number of the first lens, "v2" represents the Abbe number of the second lens, "v3" represents the Abbe number of the third lens, and "v4" represents the Abbe number of the fourth lens.

According to an embodiment, the lens assembly described above or an electronic device including the lens assembly may further include a band-pass filter disposed between the fourth lens and the image sensor, and the band-pass filter may have a transmittance ranging from 90% to 99% with respect to light having a wavelength between 800 nm to 1000 nm, and a transmittance ranging from 0.0001 % to 1% with respect to visible light.

According to an embodiment, the above-described electronic device may further include a light source device (e.g., the light-emitting device 306 in FIG. 4), and the first camera may acquire the first information by receiving light emitted from the light source device and reflected by the subject.

According to an embodiment, the light source device may include an infrared-emitting diode or a near infrared laser light source.

According to an embodiment, the ratio of the total focal length of the lens assembly to the focal length of the first lens may satisfy Conditional Expression 7 as follows. $0.2 \le \frac{f}{f_1} \le 0.65$

Here, "f" represents the total focal length of the lens assembly, and "$f_1$" represents the focal length of the first lens.

According to an embodiment, the ratio of the total focal length of the lens assembly to the focal length of the second lens may satisfy Conditional Expression 8 as follows.

$$0.02 \le \frac{f}{f_2} \le 0.65$$

Here, "f" represents the total focal length of the lens assembly, and "$f_2$" represents the focal length of the second lens.

According to an embodiment, the ratio of the focal length of the first lens to the focal length of the second lens may

$$0.05 \leq \frac{f_1}{f_2} \leq 1.2$$

satisfy Conditional Expression 9 as follows.

Here, "$f_1$" represents the focal length of the first lens, and "$f_2$" represents the focal length of the second lens.

According to an embodiment, the ratio of the curvature radius of the image sensor side surface of the fourth lens to the curvature radius of the image sensor side surface of the second lens may satisfy Conditional Expression 10 as follows.

$$0.1 \leq \left| \frac{R_9}{R_5} \right| \leq 0.8$$

Here, "$R_5$" represents the curvature radius of the image sensor side surface S5 of the second lens, and "$R_9$" represents the curvature radius of the image sensor side surface S9 of the fourth lens 404.

According to an embodiment, the processor or the image signal processor may generate an image of the subject by combining the first information and the second information.

According to an embodiment, the second information includes at least one of color information, brightness information, saturation information, and contrast information on the subject.

While the disclosure has been shown and described with reference to certain embodiments thereof, it will be understood by those skilled in the art that various changes in form and details may be made therein without departing from the scope of the disclosure as defined by the appended claims.


**Claims**

1. A lens assembly (400) comprising:

   a first lens (401) having positive refractive power, a subject side surface of the first lens (S2) having a convex shape towards a subject;
   a second lens (402) having positive refractive power, wherein a subject side surface of the second lens (S4) includes:

   a center portion intersecting an optical axis having a convex shape towards the subject, and
   a peripheral portion around the center portion and having a convex shape towards an image sensor (406);

   a third lens (403) having negative refractive power; and
   a fourth lens (404) having positive refractive power,
   wherein the first lens (401), the second lens (402), the third lens (403), and the fourth lens (404) are sequentially arranged from the subject to the image sensor (406) along the optical axis,
   wherein a sum of Abbe numbers of the first lens (401), the second lens (402), the third lens (403), and the fourth lens (404) satisfies Conditional Expression 1 as follows:

   $$20 \leq v1 + v2 + v3 + v4 \leq 125.$$

   wherein "v1" represents an Abbe number of the first lens (401), "v2" represents an Abbe number of the second lens (402), "v3" represents an Abbe number of the third lens (403), and "v4" represents an Abbe number of the fourth lens (404),
   wherein a ratio of a total focal length of the lens assembly (400, 500, 600, 700, 800) to a focal length of the second lens (402) satisfies Conditional Expression 3 as follows:

   $$0.02 \leq \frac{f}{f_2} \leq 0.65$$

   wherein "f" represents the total focal length of the lens assembly (400, 500, 600, 700, 800), and "f2" represents the focal length of the second lens (402),
   wherein a ratio of a focal length of the first lens (401) to a focal length of the second lens (402) satisfies Conditional Expression 4 as follows:

$$0.05 \le \frac{f_1}{f_2} \le 1.2$$

wherein "$f_1$" represents the focal length of the first lens (401), and "f2" represents the focal length of the second lens (402),

wherein a ratio of a curvature radius of an image sensor side surface of the fourth lens (S9) to a curvature radius of an image sensor side of the second lens (S5) satisfies Conditional Expression 5 as follows:

$$0.1 \le \left| \frac{R_9}{R_5} \right| \le 0.8$$

wherein "R5" represents the curvature radius of the image sensor side surface of the second lens (S5), and "R9" represents the curvature radius of the image sensor side surface of the fourth lens (S9).

2. The lens assembly (400) of claim 1, wherein at least one of the first lens (401), the second lens (402), the third lens (403), and the fourth lens (404) is a plastic aspherical lens.

3. The lens assembly (400) of claim 1, further comprising:

   a band-pass filter (405) disposed between the fourth lens (404) and the image sensor (406),
   wherein the band-pass filter (405) has a transmittance ranging from 90% to 99% with respect to light having a wavelength between 800 nm to 1000 nm, and a transmittance ranging from 0.0001% to 1% with respect to visible light.

4. The lens assembly (400) of claim 1, wherein an image sensor side surface of the third lens (S7) has a convex shape towards the image sensor (406) at least in a center portion of the image sensor side surface of the third lens (S7) intersecting the optical axis.

5. The lens assembly (400) of claim 1,

   wherein a subject side surface of the fourth lens (S8) has a convex shape towards the subject at least in a center portion of the subject side surface of the fourth lens (S8) intersecting the optical axis, and
   wherein an image sensor side surface of the fourth lens (S9) has a concave shape towards the image sensor (406) at least in a center portion of the image sensor side surface of the fourth lens (S9) intersecting the optical axis.

6. The lens assembly (400) of claim 1, wherein a ratio of a total focal length of the lens assembly (400) to a focal length of

   $$0.2 \le \frac{f}{f_1} \le 0.65$$

   the first lens (401) satisfies Conditional Expression 2 as follows:                    wherein "f" represents the total focal length of the lens assembly (400, 500, 600, 700, 800), and "$f_1$" represents the focal length of the first lens (401).

7. The lens assembly (400) of claim 1, wherein at least the image sensor side surface of the fourth lens (S9) has a concave shape towards the image sensor (406).

8. An electronic device (101, 300) comprising:

   a first camera (305, 313) including a lens assembly (400) according to any one of claims 1 through 7, and configured to acquire first information on a subject from light incident through the lens assembly (400);
   at least one second camera (312) configured to acquire second information on the subject different from the first information; and
   a processor or an image signal processor (120, 260) configured to detect distance information of the subject based on the first information.

9. The electronic device (101, 300) of claim 8, further comprising:

a light source device (306),
wherein the first camera (305, 313) is configured to acquire the first information by receiving light emitted from the light source device (306) and reflected by the subject.

10. The electronic device (101, 300) of claim 9, wherein the light source device (306) includes an infrared-emitting diode or a near infrared laser light source.

11. The electronic device (101, 300) of claim 8, wherein the processor or the image signal processor (120, 260) is configured to generate an image of the subject by synthesizing the first information and the second information.

12. The electronic device (101, 300) of claim 8, wherein the second information includes at least one of color information, brightness information, saturation information, and contrast information of the subject.

## Patentansprüche

1. Objektiv (400), umfassend:

eine erste Linse (401) mit positiver Brechkraft, wobei eine subjektseitige Fläche (S2) der ersten Linse in Richtung eines Subjekts eine konvexe Form aufweist;
eine zweite Linse (402) mit positiver Brechkraft, wobei eine subjektseitige Fläche (S4) der zweiten Linse Folgendes umfasst:

einen Mittelabschnitt, der eine optische Achse schneidet und eine konvexe Form in Richtung des Subjekts aufweist, und
einen Randabschnitt um den Mittelabschnitt herum, der eine konvexe Form in Richtung eines Bildsensors (406) aufweist;

eine dritte Linse (403) mit negativer Brechkraft; und
eine vierte Linse (404) mit positiver Brechkraft,
wobei die erste Linse (401), die zweite Linse (402), die dritte Linse (403) und die vierte Linse (404) vom Subjekt zum Bildsensor (406) entlang der optischen Achse hintereinander angeordnet sind,
wobei eine Summe der Abbe-Zahlen der ersten Linse (401), der zweiten Linse (402), der dritten Linse (403) und der vierten Linse (404) den Bedingungsausdruck 1 wie folgt erfüllt:

$$20 \leq v1 + v2 + v3 + v4 \leq 125$$

wobei "v1" eine Abbe-Zahl der ersten Linse (401), "v2" eine Abbe-Zahl der zweiten Linse (402), "v3" eine Abbe-Zahl der dritten Linse (403) und "v4" eine Abbe-Zahl der vierten Linse (404) darstellt,
wobei ein Verhältnis einer Gesamtbrennweite des Objektivs (400, 500, 600, 700, 800) zu einer Brennweite der zweiten Linse (402) den Bedingungsausdruck 3 wie folgt erfüllt:

$$0{,}02 \leq \frac{f}{f_2} \leq 0{,}65$$

wobei "f" die Gesamtbrennweite des Objektivs (400, 500, 600, 700, 800) und "$f_2$" die Brennweite der zweiten Linse (402) darstellt,
wobei ein Verhältnis einer Brennweite der ersten Linse (401) zu einer Brennweite der zweiten Linse (402) den Bedingungsausdruck 4 wie folgt erfüllt:

$$0{,}05 \leq \frac{f_1}{f_2} \leq 1{,}2$$

wobei "$f_1$" die Brennweite der ersten Linse (401) und "$f_2$" die Brennweite der zweiten Linse (402) darstellt,

wobei ein Verhältnis eines Krümmungsradius einer bildsensorseitigen Oberfläche (S9) der vierten Linse zu einem Krümmungsradius einer bildsensorseitigen Oberfläche (S5) der zweiten Linse den Bedingungsausdruck 5 wie folgt erfüllt:

$$0,1 \leq \left|\frac{R_9}{R_5}\right| \leq 0,8$$

wobei "$R_5$" den Krümmungsradius der bildsensorseitigen Oberfläche (S5) der zweiten Linse und "Rg" den Krümmungsradius der bildsensorseitigen Oberfläche (S9) der vierten Linse darstellt,

2. Objektiv (400) nach Anspruch 1, wobei mindestens eine der ersten Linse (401), der zweiten Linse (402), der dritten Linse (403) und der vierten Linse (404) eine asphärische Kunststofflinse ist.

3. Objektiv (400) nach Anspruch 1, ferner umfassend:

   ein Bandpassfilter (405), das zwischen der vierten Linse (404) und dem Bildsensor (406) angeordnet ist, wobei das Bandpassfilter (405) eine Durchlässigkeit im Bereich von 90 % bis 99 % in Bezug auf Licht mit einer Wellenlänge zwischen 800 nm und 1000 nm und eine Durchlässigkeit im Bereich von 0,0001 % bis 1 % in Bezug auf sichtbares Licht aufweist.

4. Objektiv (400) nach Anspruch 1, wobei eine bildsensorseitige Oberfläche (S7) der dritten Linse eine konvexe Form in Richtung des Bildsensors (406) aufweist, und zwar zumindest in einem Mittelabschnitt der bildsensorseitigen Oberfläche (S7) der dritten Linse, der die optische Achse schneidet.

5. Objektiv (400) nach Anspruch 1,

   wobei eine subjektseitige Oberfläche (S8) der vierten Linse eine konvexe Form in Richtung des Subjekts aufweist, und zwar zumindest in einem Mittelabschnitt der subjektseitigen Oberfläche (S8) der vierten Linse, der die optische Achse schneidet, und
   wobei eine bildsensorseitige Oberfläche (S9) der vierten Linse eine konkave Form in Richtung des Bildsensors (406) aufweist, und zwar zumindest in einem Mittelabschnitt der bildsensorseitigen Oberfläche (S9) der vierten Linse, der die optische Achse schneidet.

6. Objektiv (400) nach Anspruch 1, wobei ein Verhältnis einer Gesamtbrennweite des Objektivs (400) zu einer Brennweite der ersten Linse (401) den Bedingungsausdruck 2 wie folgt erfüllt:

$$0,02 \leq \frac{f}{f_1} \leq 0,65$$

wobei "f" die Gesamtbrennweite des Objektivs (400, 500, 600, 700, 800) und "$f_1$" die Brennweite der ersten Linse (401) darstellt.

7. Objektiv (400) nach Anspruch 1, wobei zumindest die bildsensorseitige Oberfläche (S9) der vierten Linse in Richtung des Bildsensors (406) eine konkave Form aufweist.

8. Elektronische Vorrichtung (101, 300), umfassend:

   eine erste Kamera (305, 313) mit einem Objektiv (400) gemäß einem der Ansprüche 1 bis 7, die dazu konfiguriert ist, aus durch das Objektiv (400) einfallendem Licht erste Informationen über ein Subjekt zu erfassen;
   mindestens eine zweite Kamera (312), die dazu konfiguriert ist, zweite Informationen über das Subjekt zu erfassen, die sich von den ersten Informationen unterscheiden; und
   einen Prozessor oder einen Bildsignalprozessor (120, 260), der dazu konfiguriert ist, Entfernungsinformationen des Subjekts basierend auf den ersten Informationen zu detektieren.

9. Elektronische Vorrichtung (101, 300) nach Anspruch 8, ferner umfassend:

eine Lichtquellenvorrichtung (306),
wobei die erste Kamera (305, 313) dazu konfiguriert ist, die ersten Informationen durch Empfangen von Licht zu erfassen, das von der Lichtquellenvorrichtung (306) emittiert und von dem Subjekt reflektiert wird.

10. Elektronische Vorrichtung (101, 300) nach Anspruch 9, wobei die Lichtquellenvorrichtung (306) eine Infrarot-emittierende Diode oder eine Nahinfrarot-Laserlichtquelle umfasst.

11. Elektronische Vorrichtung (101, 300) nach Anspruch 8, wobei der Prozessor oder der Bildsignalprozessor (120, 260) dazu konfiguriert ist, durch Synthese der ersten und der zweiten Informationen ein Bild des Subjekts zu erzeugen.

12. Elektronische Vorrichtung (101, 300) nach Anspruch 8, wobei die zweiten Informationen mindestens eine der folgenden Informationen umfassen: Farbinformationen, Helligkeitsinformationen, Sättigungsinformationen und Kontrastinformationen des Subjekts.

## Revendications

1. Objectif (400) comprenant :

une première lentille (401) de puissance positive, une surface côté sujet (S2) de la première lentille ayant une forme convexe en direction d'un sujet ;
une deuxième lentille (402) de puissance positive, une surface côté sujet (S4) de la deuxième lentille comprenant :

une partie centrale coupant un axe optique et présentant une forme convexe en direction du sujet, et
une partie périphérique entourant la partie centrale et présentant une forme convexe en direction d'un capteur d'image (406) ;

une troisième lentille (403) de puissance négative ; et
une quatrième lentille (404) de puissance positive ;
lesdites première lentille (401), deuxième lentille (402), troisième lentille (403) et quatrième lentille (404) étant disposées l'une après l'autre depuis le sujet en direction du capteur d'image (406) le long de l'axe optique,
la somme des nombres d'Abbe desdites première lentille (401), deuxième lentille (402), troisième lentille (403) et quatrième lentille (404) satisfaisant l'expression conditionnelle 1 suivante :

$$20 \leq v1 + v2 + v3 + v4 \leq 125$$

dans laquelle « v1 » représente le nombre d'Abbe de la première lentille (401), « v2 » représente le nombre d'Abbe de la deuxième lentille (402), « v3 » représente le nombre d'Abbe de la troisième lentille (403) et « v4 » représente le nombre d'Abbe de la quatrième lentille (404),
le rapport de la distance focale totale de l'objectif (400, 500, 600, 700, 800) à la distance focale de la deuxième lentille (402) satisfaisant l'expression conditionnelle 3 suivante :

$$0{,}02 \leq \frac{f}{f_2} \leq 0{,}65$$

où « f » représente la distance focale totale de l'objectif (400, 500, 600, 700, 800) et « $f_2$ » représente la distance focale de la deuxième lentille (402),
le rapport de la distance focale de la première lentille (401) à la distance focale de la deuxième lentille (402) satisfaisant l'expression conditionnelle 4 suivante :

$$0{,}05 \leq \frac{f_1}{f_2} \leq 1{,}2$$

où « $f_1$ » représente la distance focale de la première lentille (401) et « $f_2$ » représente la distance focale de la deuxième lentille (402),
le rapport du rayon de courbure d'une surface côté capteur d'image (S9) de la quatrième lentille au rayon de courbure d'une surface côté du capteur d'image (S5) de la deuxième lentille satisfaisant l'expression conditionnelle 5 suivante :

$$0,1 \leq \left|\frac{R_9}{R_5}\right| \leq 0,8$$

où « $R_5$ » représente le rayon de courbure de la surface côté capteur d'image (S5) de la deuxième lentille, et « $R_9$ » représente le rayon de courbure de la surface côté capteur d'image (S9) de la quatrième lentille.

2. Objectif (400) selon la revendication 1, dans lequel au moins une lentille parmi la première lentille (401), la deuxième lentille (402), la troisième lentille (403) et la quatrième lentille (404) est une lentille asphérique en plastique.

3. Objectif (400) selon la revendication 1, comprenant en outre :

   un filtre passe-bande (405) disposé entre la quatrième lentille (404) et le capteur d'image (406),
   ledit filtre passe-bande (405) ayant une transmittance allant de 90 % à 99 % par rapport à une lumière dont la longueur d'onde est comprise entre 800 nm et 1000 nm, et une transmittance allant de 0,0001 % à 1 % par rapport à la lumière visible.

4. Objectif (400) selon la revendication 1, dans lequel une surface côté capteur d'image (S7) de la troisième lentille a une forme convexe en direction du capteur d'image (406) au moins dans une partie centrale de la surface côté capteur d'image (S7) de la troisième lentille coupant l'axe optique.

5. Objectif (400) selon la revendication 1,

   dans lequel une surface côté sujet (S8) de la quatrième lentille a une forme convexe en direction du sujet au moins dans une partie centrale de la surface côté sujet (S8) de la quatrième lentille coupant l'axe optique, et
   dans lequel une surface côté capteur d'image (S9) de la quatrième lentille a une forme concave en direction du capteur d'image (406) au moins dans une partie centrale de la surface côté capteur d'image (S9) de la quatrième lentille coupant l'axe optique.

6. Objectif (400) selon la revendication 1, dans lequel le rapport de la distance focale totale de l'objectif (400) à la distance focale de la première lentille (401) satisfait l'expression conditionnelle 2 suivante :

$$0,02 \leq \frac{f}{f_1} \leq 0,65$$

où « f » représente la distance focale totale de l'objectif (400, 500, 600, 700, 800), et « $f_1$ » représente la distance focale de la première lentille (401).

7. Objectif (400) selon la revendication 1, dans lequel au moins la surface côté capteur d'image (S9) de la quatrième lentille a une forme concave en direction du capteur d'image (406).

8. Appareil électronique (101, 300) comprenant :

   une première caméra (305, 313) comportant un objectif (400) selon l'une quelconque des revendications 1 à 7 et conçue pour acquérir des premières informations sur un sujet à partir de la lumière incidente à travers l'ensemble d'objectif (400),
   au moins une deuxième caméra (312) conçue pour acquérir des deuxièmes informations sur le sujet différentes des premières informations, et
   un processeur ou un processeur de signal d'image (120, 260) conçu pour détecter des informations de distance du sujet compte tenu des premières informations.

9. Appareil électronique (101, 300) selon la revendication 8, comprenant en outre :

   un dispositif formant source de lumière (306),

ladite première caméra (305, 313) étant conçue pour acquérir les premières informations en recevant la lumière émise par le dispositif formant source de lumière (306) et réfléchie par le sujet.

10. Dispositif électronique (101, 300) selon la revendication 9, dans lequel le dispositif formant source de lumière (306) comporte une diode électroluminescente infrarouge ou une source de lumière laser proche infrarouge.

11. Dispositif électronique (101, 300) selon la revendication 8, dans lequel le processeur ou le processeur de signal d'image (120, 260) est conçu pour générer une image du sujet en synthétisant les premières informations et les deuxièmes informations.

12. Dispositif électronique (101, 300) selon la revendication 8, dans lequel les deuxièmes informations comprennent au moins un type d'information parmi des informations de couleur, des informations de luminosité, des informations de saturation et des informations de contraste du sujet.

FIG.1

200

280

CAMERA MODULE

220

FLASH

210

230

IMAGE SENSOR

LENS
ASSEMBLY

240

IMAGE STABILIZER

250

MEMORY

260

IMAGE SIGNAL
PROCESSOR

# FIG.2

FIG.3

FIG.4

FIG.5

FIG.6

FIG.7

**FIG.8**

FIG.9

**REFERENCES CITED IN THE DESCRIPTION**

**Patent documents cited in the description**

- TW 201915537 A

- US 20120327521 A1